# EUROPEAN PATENT SPECIFICATION

(11) **EP 3 208 143 B1**
(45) Date of publication and mention of the grant of the patent: **21.08.2019**
(21) Application number: 17156659.9
(22) Date of filing: 17.02.2017
(51) Int. Cl.: B60N 2/60, A47C 31/11

(54) **PROTECTIVE COVER FOR A CAR SEAT**
SCHUTZBEZUG FÜR EINEN FAHRZEUGSITZ
COUVERCLE DE PROTECTION POUR UN SIÈGE DE VOITURE

(30) Priority: 19.02.2016 SI 201600045
(43) Date of publication of application: 23.08.2017
(73) Proprietor: Prelet d.o.o., 8330 Metlika (SI)
(72) Inventor: Matekovic, Miro, 8330 Metlika (SI)
(74) Representative: Flak, Antonija

(56) References cited:
- EP-A1- 2 913 224
- AT-U2- 2 198
- DE-U1- 9 016 852

## Description

### Field of the invention

The present invention belongs to the field of protective covers for car seats, more precisely to the field of changeable protective covers, which have antistatic and slip-resistant surfaces.

### Technical problem

The technical problem, which is solved by the present invention, is how to design a universal protective cover for protection of a finished seat in automotive industry, in order to keep the finished seat clean and undamaged despite the conditions in production halls. Production halls, in which car seats are produced, are full of dust and partially contaminated with paints and oil, which might be transferred to the seat by workers in contact with the seat. The cover must have antistatic and slip- resistant surfaces, so that its function is optimal. A person skilled in the art would recognize that non-movement of the protective cover due to non-slipping surfaces is one of the key functions enabling optimal protection of car seats. Because the use of the protective cover is temporary and a large number of covers is needed in the automotive industry, it has to be acceptable in terms of its shape, material quality, price and ecological impact. The aim of the invention is a cover for a car seat, which is made from a combination of different materials and assembled into a whole product in a simple manner.

### State of the art

Different covers from simple materials are known and widely used in the automotive industry. These covers are more or less made from simple materials, which are also liquid absorbent.

Patent US 6655735 B1 discloses a solution of covers, which are mode from a water-repellent material. Document US 6050639 describes a design solution of a protective cover made from a plastic material. The upper part of the cover has a reinforced tape on the fold line between the upper and the seating part. The reinforcement tape has a layer of glue with a protective foil, which is removed when the cover is mounted to a seat.

Document EP 2 913 224 discloses a protective cover for a car seat for use in the manufacture and maintenance of vehicles for protecting the vehicle seat. The cover has a back part and a front part made of antistatic polypropylene and does not disclose an additional layer, which would provide slip-resistant properties.

Known solutions differ from the present invention in that they do not have antistatic and slip-resistant surfaces.

### Description of the invention

The protective cover according to the invention comprises the features of claim 1.

The essence of the protective cover for a car seat according to the invention is that it has a back part made from antistatic polypropylene (PP spunbond - non woven) with gram weight from 10g/m² to 100 g/m², and a part, which is placed on the seating part of seat, made from antistatic polypropylene with gram weight from 10 g/m² to 100 g/m² and slip-resistant polyethylene film having a thickness between 10 and 100 µm. The slip-resistant film ensures that the protective cover remains in its place thereby contributing to its optimal function. Parts of the cover may be assembled together with ultrasonic welding, cold forming with glue or heat forming, wherein the polyethylene film is automatically adhered to the base polypropylene.

The protective cover for a car seat for use in protection of car seats in the process of manufacturing or servicing according to the invention will be described in further detail based on figures, which show:
- Figure 1: back side of the protective cover for a car seat
- Figure 2: front side of the protective cover for a car seat
- Figure 3: back side of the protective cover for a car seat according to embodiment I
- Figure 4: front side of the protective cover for a car seat according to embodiment I

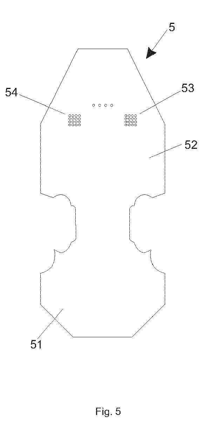

- Figure 5: back side of the protective cover for a car seat according to embodiment II

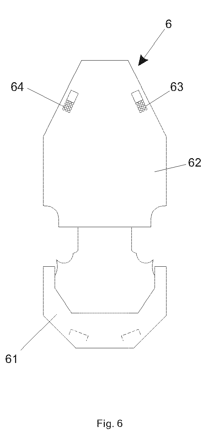

- Figure 6: front side of the protective cover for a car seat according to embodiment II

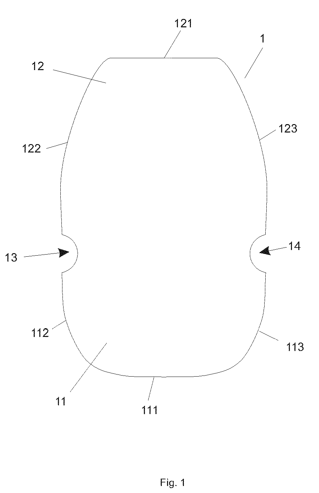

The protective cover for car seats is made from a back part 1 and a front part 2, which are ultrasonically welded together. The back part 1 has a bottom part 11 with a bottom side 111 parallel to an upper side 121 of an upper part 12. The upper side 121 is slightly shorter than the bottom side 111. From the bottom side 111 of the bottom part 11 two curved sides 112 and 113 are formed on the left and the right side, respectively. From the upper side 121 of the upper part 12 two curved sides 122 and 123 are formed on the left and the right side, respectively. Left sides 112 and 122 are connected with a first semi-circular arc 13, while right sides 113 and 123 are connected with a second semi-circular arc 14. The left curved side 112, the first arc 13 and the upper left curved side 122 are in respect to the vertical axis mirror pictures of the right curved side 122, the second arc 14 and the upper right curved side 123, as shown in figure 1.

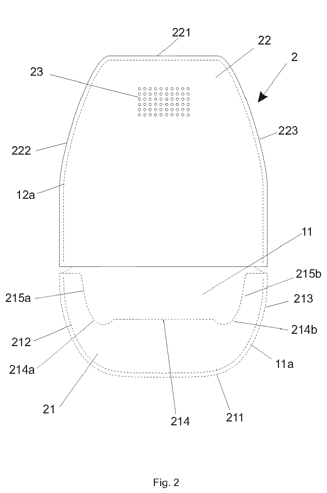

The protective cover for car seats is made from a front part 2 and a back part 1, which are ultrasonically welded together. The front part 2 has a bottom part 21 with a bottom side 211 parallel to an upper side 221 of an upper part 22. The upper side 221 is slightly shorter than the bottom side 211. From the bottom side 211 of the bottom part 21 two curved sides 212 and 213 are formed on the left and the right side, respectively. From the upper side 221 of the upper part 22 two curved sides 222 and 223 are formed on the left and the right side, respectively. The bottom part 21 has an underlying side 214, which has two circular cut-outs 214a and 214b and ends with sides 215a and 215b. Left sides 222 and 212 are in respect to the vertical axis mirror pictures of the right sides 223 and 213. In the upper part of the upper part 22 a group of holes 23 is located as shown in figure 2. Sides 211, 212 and 213 are connected with sides 111, 112 and 113 with a first ultrasonic weld 11a. Sides 121, 122 and 123 are connected with sides 221, 222 and 223 with a second ultrasonic weld 12a. In this way a protective cover for a car seat is formed, which is mounted on the seat so that the upper part is mounted on the backrest of the seat, while the bottom part is mounted on the seating part of the seat. The bottom part 21 is then folded under the seat as shown in figure 2.

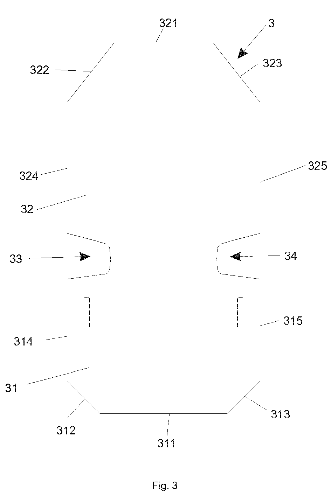

According to embodiment I, the protective cover for car seats is made from a back part 3 and a front part 4, which are ultrasonically welded together. The back part 3 has a bottom part 31 with a bottom side 311, which is parallel to an upper side 321 of an upper part 32. The upper side 321 is slightly shorter than the bottom side 311. From the bottom side 311 of the bottom part 31 two curved sides 312 and 313 are formed on the left and the right side, respectively. The left curved side 312 continues to a left straight side 314, while on the other side the right curved side 313 continues to a right straight side 315. From the upper side 321 of the upper part 32 two curved sides 322 and 323 are formed on the left and the right side, respectively. The side left upper curved 322 continues to a left straight side 324, while on the other side the right curved side 323 continues to a right straight side 325. Sides 324 and 314 are connected with approximately rectangular parts 33 and 34. As shown in figure 3 the longitudinal sides are parallel to the vertical axis.

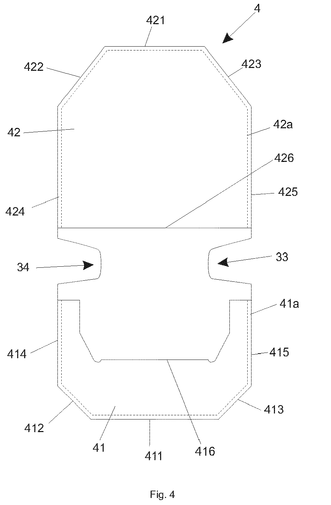

The front part 4 has a bottom part 41 with a bottom side 411 parallel to an upper side 421 of an upper part 42. The upper side 421 is slightly shorter than the bottom side 411. From the bottom side 411 of the bottom part 41 two curved sides 412 and 413 are formed on the left and the right side, respectively. From the upper side 421 of the upper part 42 two curved sides 422 and 423 are formed on the left and the right side, respectively. A middle side 426 is parallel to the upper side 421. The bottom part 41 has a left straight side 414, which is parallel to a right straight side 415. The left straight side 414 is connected to a left upper straight side 424 via a first rectangularly tapered part 34, the right straight side 415 is connected to a right upper straight side 425 via a second rectangularly tapered part 33. Sides 411, 412, 413, 414 and 415 are connected to sides 311, 312, 313, 314 and 315 with a first ultrasonic weld 41a. Sides 421, 422, 423, 424 and 425 are connected to the sides 321, 322, 323, 324 and 225 with a second ultrasonic weld 42a. In this way a protective cover for a car seat is obtained, which is mounted so that the upper part is mounted on the backrest of the seat, while the bottom part is mounted on the seat part. The part 41 is rolled under the seat as shown in figure 4.

According to embodiment II the protective cover for a car seat is made from a back part 5 and a front part 6, which are ultrasonically welded together. The part 5 has an upper part 52, which has a left middle part 53 and a right middle part 54 with holes. The part 6 has a seating part 61 and an upper part 62 for the backrest of the seat. In the upper part 62 are two side parts 63 and 64 with holes. A tapered part is in the middle, which enables mounting of the cover on the seat. The front and back parts 6 and 5 are welded on their external sides, so that the obtained cover can be mounted on a car seat.

In all mentioned embodiments the back part is made from antistatic polypropylene (PP spunbond - non woven) with gram weight from 10g/m² to 100 g/m² and the part on the seating part of a seat is made from antistatic polypropylene with gram weight from 10 g/m² to 100 g/m² and anti-slip polyethylene film having a thickness from 10 to 100 µm. Parts of the cover may be assembled together with ultrasonic welding, cold forming with glue or heat forming, wherein the polyethylene film is automatically adhered to the base polypropylene.

The back parts 12, 32 and 52 of the cover are made from antistatic polypropylene (PP spunbond - non woven) with gram weight from 10g/m² to 100 g/m². The parts 11, 31, 51, which are placed on the seating part of the seat, are made from antistatic polypropylene with gram weight from 10 g/m² to 100 g/m² and anti-slip polyethylene film having a thickness between 10 and 100 µm. Parts of the cover may be assembled together with ultrasonic welding, cold forming with glue or heat forming, wherein the polyethylene film is automatically adhered to the base polypropylene.

Another possible combination of materials is also that the back parts 12, 32, 52 of the cover is made from antistatic polypropylene (PP spunbond - non woven) with gram weight from 10g/m² to 100 g/m², while a layer of polypropylene, latex or nitrile is added to parts 11,31,51, which contributes to anti-slip properties of the cover.

By the combination of the shape and material combination the solution of the protective cover for a car seat having antistatic and slip-resistant properties is achieved. In this way a product is created, which enables simple and good protection of new car seats during manufacturing process or during servicing, where a lot of dirt, dust and material damage possibilities exist.

## Claims

1. A protective cover for a car seat for use in protection of car seats in the process of manufacturing or servicing, **characterized in that** it has a back part made from antistatic polypropylene, spunbond and non woven, with gram weight from 10g/m² to 100 g/m², and a part, which is intended to be placed on the seating part of a seat, made from antistatic polypropylene with gram weight from 10 g/m² to 100 g/m² and an anti-slip polyethylene film having a thickness between 10 and 100 µm.

2. The protective cover for a car seat according to claim 1, **characterized in that** parts of the cover may be assembled together with ultrasonic welding, cold forming with glue or heat forming, wherein the polyethylene film is automatically adhered to the base polypropylene.

3. The protective cover for a car seat according to any of the preceding claims **characterized in that** it is made from a back part (1) and a front part (2), which are welded together with ultrasound; that the back part (1) has a bottom part (11) with a bottom side (111) parallel to an upper side (121) of an upper part (12); the upper side (121) being slightly shorter than the bottom side (111); that from the bottom side (111) of the bottom part (11) two curved sides 112,113) are formed on the left and the right side, respectively; that from the upper side (121) of the upper part (12) two upper curved sides 122,123) are formed on the left and the right side, respectively; that the left curved sides (112,122) are connected with connected with a first semi-circular arc (13), while the right sides (113, 123) are connected with a second semi-circular arc (14); that the left curved side (112), the first arc (13) and the upper left curved side (122) are in respect to the vertical axis mirror pictures of the right side (122), the second arc (14) and the right upper curved side (123); that a front part (2) has a bottom part (21) with a bottom side (211) parallel to an upper side (221) of an upper part (22); that the upper side 221) is slightly shorter than the bottom side (211); that from the bottom side (211) of the bottom part (21) two curved sides (212, 213) are formed on the left and the right side, respectively; that from the upper side (221) of the upper part (22) two upper curved sides (222, 223) are formed on the left and the right side, respectively; that the bottom part (21) has an underlying side (214), which has two circular cut-outs (214a, 214b) and ends with sides (215a and 215b); that left sides (222, 212) are in respect to the vertical axis mirror pictures of right sides (223, 213); that the upper section of the upper part (22) is provided with a group of holes (23); that sides (211, 212, 213) are connected to sides (111, 112 and 113) with a first ultrasonic weld (11a); that sides (121, 122, 123) are connected to sides (221, 222, 223) with a second ultrasonic weld (12a).

4. The protective cover for a car seat according to claims 1 and 2, **characterized in that** the back part (3) has a bottom part (31) with a bottom side (311), which is parallel to an upper side (321) of an upper part (32); that the upper side (321) is slightly shorter than the bottom side (311); that from the bottom side (311) of the bottom part (31) two curved sides (312 and 313) are formed on the left and the right side, respectively; that the left curved side (312) continues to a left straight side (314), while on the other side the right curved side (313) continues to a right straight side (315); that from the upper side (321) of the upper part (32) two curved sides (322, 323) are formed on the left and the right side, respectively; that the left curved side (322) continues to a left straight side (324), while on the other side the right curved side (323) continues to a right straight side (325); that left sides (324, 314) are connected with approximately rectangular parts (33, 34); that the longitudinal sides are parallel to the vertical axis; that the front part (4) has a bottom part (41) with a bottom side (411) parallel to an upper side (421) of an upper part (42); that the upper side (421) is slightly shorter than the bottom side (411); that from the bottom side (411) of the bottom part (41) two curved sides (412, 413) are formed on the left and right side, respectively; that from the upper side (421) of the upper part (42) two curved sides (422, 423) are formed on the left and right side, respectively; that the upper side (421) is parallel to a middle side (426); that the bottom part (41) has a left straight side (414), which is parallel to a right straight side (415); that the left straight side (414) is connected to an left upper straight side (424) via a first rectangularly tapered part (34); that the right straight side (415) is connected to a right upper straight side (425) via a second rectangularly tapered part (33); that sides (411, 412, 413, 414, 415) are connected to sides (311, 312, 313, 314, 315) with a first ultrasonic weld (41a); that sides (421, 422, 423, 424, 425) are connected to sides (321, 322, 323, 324, 225) with a second ultrasonic weld (42a).

5. The protective cover according to claims 1 and 2, **characterized in that** it is made of a front part (6) and a back part (5), which are ultrasonically welded together; that in the upper section the part (5) has a main part (52), which has a left middle part (53) and a right middle part (54) with holes; that the front part (6) has a seat part (61) and an upper part (62) for a backrest of a seat; that the upper part (62) has two side parts (63, 64) with holes; that a tapered portion is provided in the middle, the tapered portion allowing mounting of the cover to the seat.

6. The protective cover for a car seat according to any of the preceding claims, **characterized in that** it has antistatic and slip-resistant properties.

7. The protective cover for a car seat according to any of the preceding claims, **characterized in that** it is used for protection of a car seat, wherein the upper part is mounted on backrest of the car seat, while the bottom part is placed on the seating part of the seat.

## Patentansprüche

1. Schutzbezug für einen Autositz zur Verwendung beim Schutz von Autositzen im Herstellungs- oder Wartungsverfahren, **dadurch gekennzeichnet, dass** es ein Rückenteil aus antistatischem Polypropylen, Spunbond-Vliesstoff, mit einer Grammatur von 10 g/m² bis 100 g/m², und ein Teil, das dazu bestimmt ist, auf die Sitzfläche eines Sitzes aufgesetzt zu werden, hergestellt aus antistatischem Polypropylen mit einer Grammatur von 10 g/m² bis 100 g/m² und eine Antirutsch-Polyethylenfolie mit einer Dicke zwischen 10 und 100 µm, aufweist.

2. Schutzbezug für einen Autositz nach Anspruch 1, **dadurch gekennzeichnet, dass** die Teile des Bezugs mit Ultraschallschweißung, Kaltumformen mit Leim oder Warmumformen zusammengefügt werden können, wobei die Polyethylenfolie automatisch mit dem Basispolypropylen verklebt wird.

3. Schutzbezug für einen Autositz nach einem der vorhergehenden Ansprüche, **dadurch gekennzeichnet, dass** er aus einem Rückenteil (1) und einem Vorderteil (2), die mit Ultraschall miteinander verschweißt sind, besteht; dass das Rückenteil (1) ein Bodenteil mit einer zu einer Oberseite (121) eines Oberteils parallelen Unterseite (111) aufweist; dass die Oberseite (121) etwas kürzer als die Unterseite (111) ist; dass von der Unterseite (111) des Unterteils (11) zwei gekrümmten Seiten (112, 113) auf der linken bzw. der rechten Seite ausgebildet sind; dass von der Oberseite (121) des Oberteils (12) zwei obere gekrümmten Seiten (122, 123) auf der linken bzw. der rechten Seite ausgebildet sind; dass die linken gekrümmten Seiten (112, 122) mit einem ersten Halbkreisbogen (13) verbunden sind, während die rechten Seiten (113, 123) mit einem zweiten Halbkreisbogen (14) verbunden sind; dass die linke gekrümmte Seite (112), der erste Bogen (13) und die obere linke gekrümmte Seite (122) bezüglich der Hochachse Spiegelbilder der rechten Seite (122), des zweiten Bogens (14) und der rechten oberen gekrümmten Seite (123) sind; dass ein Vorderteil (2) ein Bodenteil (21) mit einer Unterseite (211) parallel zu einer Oberseite (221) eines Oberteils (22) aufweist; dass die Oberseite (221) etwas kürzer als die Unterseite (211) ist; dass von der Unterseite (211) des Unterteils (21) zwei gekrümmten Seiten (212, 213) auf der linken bzw. der rechten Seite ausgebildet sind; dass von der Oberseite (221) des Oberteils (22) zwei obere gekrümmten Seiten (222, 223) auf der linken bzw. der rechten Seite ausgebildet sind; dass das Unterteil (21) eine Unterseite (214) aufweist, die zwei kreisförmige Aussparungen (214a, 214b) aufweist und mit Seiten (215a und 215b) endet; dass die linken Seiten (222, 212) bezüglich der Hochachse Spiegelbilder der rechten Seiten (223, 213) sind; dass der obere Abschnitt des Oberteils (22) mit einer Gruppe von Löchern (23) versehen ist; dass die Seiten (211, 212, 213) mit einer ersten Ultraschallschweißnaht (11a) mit den Seiten (111, 112 und 113) verbunden sind; dass die Seiten (121, 122, 123) mit einer zweiten Ultraschallschweißnaht (12a) mit den Seiten (221, 222, 223) verbunden sind.

4. Schutzbezug für einen Autositz nach den Ansprüchen 1 und 2, **dadurch gekennzeichnet, dass** das Rückenteil (3) ein Bodenteil (31) mit einer zu einer Oberseite (321) eines Oberteils (32) parallelen Unterseite (311) aufweist; dass die Oberseite (321) etwas kürzer als die Unterseite (311) ist; dass von der Unterseite (311) des Unterteils (31) zwei gekrümmten Seiten (312 und 313) auf der linken bzw. der rechten Seite ausgebildet sind; dass die linke Bogenseite (312) bis zu einer linken geraden Seite (314) fortsetzt, während auf der anderen Seite die rechte gekrümmte Seite (313) zu einer rechten geraden Seite (315) fortsetzt; dass von der Oberseite (321) des Oberteils (32) zwei gekrümmten Seiten (322, 323) auf der linken bzw. der rechten Seite ausgebildet sind; dass die linke Bogenseite (322) bis zu einer linken geraden Seite (324) fortsetzt, während auf der anderen Seite die rechte gekrümmte Seite (323) zu einer rechten geraden Seite (325) fortsetzt; dass diese linken Seiten (324, 314) mit etwa rechteckigen Teilen (33, 34) verbunden sind; dass die Längsseiten parallel zur Hochachse sind; dass das Vorderteil (4) ein Bodenteil (41) mit einer zu einer Oberseite (421) eines Oberteils (42) parallelen Unterseite (411) aufweist; dass die Oberseite (421) etwas kürzer als die Unterseite (411) ist; dass von der Unterseite (411) des Unterteils (41) zwei gekrümmten Seiten (412, 413) an der linken bzw. rechten Seite ausgebildet sind; dass von der Oberseite (421) des Oberteils (42) zwei gekrümmten Seiten (422, 423) auf der linken bzw. rechten Seite ausgebildet sind; dass die Oberseite (421) parallel zu einer Mittelseite (426) ist; dass das Bodenteil (41) eine linke gerade Seite (414) aufweist, die parallel zu einer rechten geraden Seite (415) ist; dass die linke gerade Seite (414) über ein erstes rechtwinklig verjüngtes Teil (34) mit einer linken oberen geraden Seite (424) verbunden ist; dass die rechte gerade Seite (415) über ein zweites rechtwinklig verjüngtes Teil (33) mit einer rechten oberen geraden Seite (425) verbunden ist; dass Seiten (411, 412, 413, 414, 415) mit einer ersten Ultraschallschweißnaht (41a) mit den Seiten (311, 312, 313, 314, 315) verbunden sind; dass Seiten (421, 422, 423, 424, 425) mit einer zweiten Ultraschallschweißnaht (42a) mit Seiten (321, 322, 323, 324, 225) verbunden sind.

5. Schutzbezug nach den Ansprüchen 1 und 2, **dadurch gekennzeichnet, dass** er aus einem Vorderteil (6) und einem Rückenteil (5) besteht, die ultraschallverschweißt sind; dass das Teil (5) im oberen Abschnitt einen Hauptteil (52) aufweist, der ein linkes Mittelteil (53) und ein rechtes Mittelteil (54) mit Löchern aufweist; dass das Vorderteil (6) eine Sitzfläche (61) und ein Oberteil (62) für eine Rückenlehne des Sitzes aufweist; dass das Oberteil (62) zwei Seitenteile (63, 64) mit Löchern aufweist; dass ein verjüngter Abschnitt in der Mitte vorgesehen ist, der die Montage des Bezugs an dem Sitz ermöglicht.

6. Schutzbezug für einen Autositz nach einem der vorhergehenden Ansprüche, **dadurch gekennzeichnet, dass** er antistatische und rutschfeste Eigenschaften aufweist.

7. Schutzbezug für einen Autositz nach einem der vorhergehenden Ansprüche, **dadurch gekennzeichnet, dass** er zum Schutz eines Autositzes verwendet wird, wobei das Oberteil an der Rückenlehne des Autositzes angebracht wird, während das Unterteil auf das der Sitzfläche des Sitzes angeordnet ist.

## Revendications

1. Une housse de protection pour siège de voiture destinée à être utilisée pour protéger les sièges de voiture pendant le processus de fabrication ou d'entretien, **caractérisée en ce qu'**elle présente une partie arrière en polypropylène antistatique, filé-lié et non tissé, avec un poids de gramme de 10 g/m² à 100 g/m², et une partie, qui est destinée à être placée sur la partie d'assise d'un siège, en polypropylène antistatique avec un poids en grammes de 10 g/m² à 100 g/m² et un film de polyéthylène antidérapant ayant une épaisseur comprise entre 10 et 100 µm.

2. Housse de protection pour siège de voiture selon la revendication 1, **caractérisée en ce que** des parties de la housse peuvent être assemblées conjointement par soudage ultrasonique, formage à froid avec de la colle ou formage à chaud, le film de polyéthylène adhérant automatiquement au polypropylène de base.

3. Housse de protection pour siège de voiture selon l'une quelconque des revendications précédentes **caractérisée en ce que** ladite housse est constituée d'une partie arrière (1) et d'une partie avant (2), qui sont soudées l'une à l'autre par ultrasons ; que la partie arrière (1) a une partie inférieure avec un côté inférieur (111) parallèle à un côté supérieur (121) d'une partie supérieure ; que le côté supérieur (121) est légèrement plus court que le côté inférieur (111) ; qu'à partir du côté inférieur (111) de la partie inférieure (11) deux côtés incurvés (112, 113) sont formés sur le côté gauche et le côté droit, respectivement ; qu'à partir du côté supérieur (121) de la partie supérieure (12) deux côtés incurvés supérieurs (122, 123) sont formés sur le côté gauche et le côté droit, respectivement ; que les côtés incurvés gauches (112, 122) sont reliés à un premier arc semi-circulaire (13), tandis que les côtés droits (113, 123) sont reliés à un second arc semi-circulaire (14) ; que le côté incurvé gauche (112), le premier arc (13) et le côté incurvé gauche supérieur (122) sont, par rapport à l'axe vertical, les images miroir du côté droit (122), du second arc (14) et du côté incurvé supérieur droit (123) ; qu'une partie avant (2) a une partie inférieure (21) ayant un côté inférieur (211) parallèle à un côté supérieur (221) d'une partie supérieure (22) ; que le côté supérieur (221) est légèrement plus court que le côté inférieur (211) ; qu'à partir du côté inférieur (211) de la partie inférieure (21) deux côtés incurvés (212, 213) sont formés sur le côté gauche et le côté droit, respectivement ; qu'à partir du côté supérieur (221) de la partie supérieure (22), deux côtés incurvés supérieurs (222, 223) sont formés sur le côté gauche et le côté droit, respectivement ; que la partie inférieure (21) a un côté sous-jacent (214), qui présente deux découpes circulaires (214a, 214b) et se termine par des côtés (215a et 215b) ; que les côtés gauche (222, 212) sont, par rapport à l'axe vertical, des images miroir des côtés droits (223, 213) ; que la section supérieure de la partie supérieure (22) est pourvue d'un groupe de trous (23) ; que les côtés (211, 212, 213) sont reliés à des côtés (111, 112 et 113) par une première soudure ultrasonique (11a) ; que les côtés (121, 122, 123) sont reliés aux côtés (221, 222, 223) par une deuxième soudure ultrasonique (12a).

4. Housse de protection pour siège de voiture selon les revendications 1 et 2, **caractérisée en ce que** la partie arrière (3) a une partie inférieure (31) avec un côté inférieur (311), qui est parallèle à un côté supérieur (321) d'une partie supérieure (32) ; que le côté supérieur (321) est légèrement plus court que le côté inférieur (311) ; qu'à partir du côté inférieur (311) de la partie inférieure (31) deux côtés incurvés (312 et 313) sont formés sur le côté gauche et le côté droit, respectivement ; que le côté incurvé gauche (312) continue jusqu'à un côté droit gauche (314), tandis que, sur l'autre côté, le côté incurvé droit (313) continue jusqu'à un droit côté droit (315) ; qu'à partir du côté supérieur (321) de la partie supérieure (32) deux côtés incurvés (322, 323) sont formés sur le côté gauche et le côté droit, respectivement ; que le côté incurvé gauche (322) continue jusqu'à un côté gauche rectiligne (324), tandis que, sur l'autre côté, le côté incurvé droit (323) continue jusqu'à un côté droit rectiligne (325) ; que les côtés gauches (324, 314) sont reliés par des parties approximativement rectangulaires (33, 34) ; que les côtés longitudinaux sont parallèles à l'axe vertical ; que la partie avant (4) a une partie inférieure (41) avec un côté inférieur (411) parallèle à un côté supérieur (421) d'une partie supérieure (42) ; que le côté supérieur (421) est légèrement plus court que le côté inférieur (411) ; qu'à partir du côté inférieur (411) de la partie inférieure (41), deux côtés incurvés (412, 413) sont formés sur le côté gauche et le côté droit, respectivement; qu'à partir du côté supérieur (421) de la partie supérieure (42), deux côtés incurvés (422, 423) sont formés sur le côté gauche et le côté droit, respectivement; que le côté supérieur (421) est parallèle à un côté intermédiaire (426) ; que la partie inférieure (41) a un côté gauche rectiligne (414), qui est parallèle à un côté droit rectiligne (415) ; que le côté gauche rectiligne (414) est relié à un côté supérieur gauche rectiligne (424) par l'intermédiaire d'une première partie rectangulaire de forme effilée (34) ; que le côté droit (415) est relié à un côté droit supérieur droit (425) par l'intermédiaire d'une deuxième partie rectangulaire de forme effilée (33) ; que les côtés (411, 412, 413, 414, 415) sont reliés aux côtés (311, 312, 313, 314, 315) par une première soudure ultrasonique (41a) ; que les côtés (421, 422, 423,424, 425) sont reliés aux côtés (321, 322, 323, 324, 225) par une deuxième soudure ultrasonique (42a).

5. Housse de protection selon les revendications 1 et 2, **caractérisée en ce que** ladite housse est constituée d'une partie avant (6) et d'une partie arrière (5), qui sont soudées l'une à l'autre par soudage ultrasonique ; que dans la section supérieure, la partie (5) présente une partie principale (52), qui a une partie centrale gauche (53) et une partie centrale droite (54) avec des trous ; que la partie avant (6) présente une partie de siège (61) et une partie supérieure (62) pour le dossier du siège ; que la partie supérieure (62) présente deux parties latérales (63, 64) avec des trous ; qu'une partie effilée est disposée au milieu, la partie effilée permettant le montage de la housse sur le siège.

6. Housse de protection pour siège de voiture selon l'une quelconque des revendications précédentes **caractérisée en ce qu'**elle présente des propriétés antistatiques et antidérapantes.

7. Housse de protection pour siège de voiture selon l'une quelconque des revendications précédentes **caractérisée en ce que** ladite housse est utilisée pour protéger un siège de voiture, la partie supérieure étant montée sur le dossier du siège de voiture, tandis que la partie inférieure est placée sur la partie d'assise du siège.
